# DEMANDE DE BREVET EUROPEEN

(11) **EP 0 941 013 A1**
(43) Date de publication de la demande: **08.09.1999**
(21) Numéro de dépôt: 99400521.3
(22) Date de dépôt: 04.03.1999
(51) Int. Cl.: H04R 3/00

(54) **Terminal de radiotélécommunication**

(30) Priorité: 05.03.1998 FR 9802684
(71) Demandeur: ALCATEL, 75008 Paris (FR)
(72) Inventeur: Bodin, Jannick, 92380 Garches (FR); Attimont, Luc, 78560 Le Port Marly (FR)
(74) Mandataire: Lamoureux, Bernard

(57) **Abrégé**

L'invention concerne un terminal de radiotélécommunication comportant un transducteur audio (5) dont une sortie (6) est orientée vers la face avant du terminal et réalisant des fonctions d'écouteur, de haut-parleur et de sonnerie, le terminal comportant, en outre, couplés au transducteur, des moyens de réglage (R1, 9', 11, 12) du niveau de l'onde acoustique émise par le transducteur suivant une direction principale (D) sensiblement perpendiculaire à la face avant, le réglage étant effectué quelque soit la position du terminal par rapport à celle d'un utilisateur.

## Description

L'invention concerne un terminal de radiotélécommunication.

Par terminal de radiotélécommunication on entend plus précisément mais de manière non limitative les terminaux des téléphones sans fil et les terminaux mobiles de type GSM.

L'invention s'applique plus particulièrement aux terminaux de radiotélécommunication qui permettent d'assurer les trois fonctions écouteur, haut-parleur et sonnerie tout en garantissant les règles de sécurité imposées en la matière vis à vis de l'utilisateur.

Les règles de sécurité concernent notamment le fait que le niveau du signal de sonnerie ne doit pas dépasser un seuil prédéterminé lorsque l'oreille de l'utilisateur est à proximité des moyens assurant la fonction de sonnerie (choc acoustique). Paradoxalement, ce niveau de sonnerie doit être amplifié lorsque le terminal n'est pas à proximité de l'oreille de l'utilisateur pour que ce dernier entende le signal de sonnerie. Il en est de même pour le signal vocal lorsque le terminal est en fonction haut-parleur.

A cet effet un terminal de radiotélécommunication de type GSM comporte de manière usuelle un transducteur audio qui réalise les fonctions d'écouteur et de haut-parleur et un élément, tel qu'une sonnerie ou un vibreur, distinct du transducteur qui réalise la fonction de sonnerie. La sonnerie ou le vibreur est éloigné(e) du transducteur de manière à éviter tout risque de choc acoustique. Cependant la présence de cet élément augmente de manière significative le volume du terminal et implique un surcoût non négligeable dans le prix de revient du terminal. En outre ce terminal ne permet pas de résoudre le problème du haut-parleur.

Le document US 4 504 701 décrit un terminal de téléphone sans fil comportant un récepteur émettant un signal vocal et un signal de sonnerie, ainsi qu'un circuit de traitement du signal de sonnerie et un amplificateur audio relié au récepteur. Pour éviter que l'utilisateur subisse un choc acoustique le terminal comporte en outre un commutateur de gravité monté en parallèle avec une résistance d'atténuation entre le circuit de traitement du signal de sonnerie et l'amplificateur. Lorsque le terminal est sur sa base ou hors de sa base mais en position sensiblement horizontale, le commutateur de gravité est dans une position prédéterminée dans laquelle le signal de sonnerie est transmis en l'état à l'amplificateur et ainsi au récepteur. Lorsque le terminal est retiré de sa base et en position sensiblement verticale, le commutateur est en position ouverte de sorte que le signal de sonnerie est atténué par la résistance parallèle à un niveau prédéterminé évitant le choc acoustique. C'est ce signal atténué qui est transmis au transducteur par l'intermédiaire de l'amplificateur.

En d'autres termes, le signal de sonnerie n'est pas modifiée lorsque le terminal est sur sa base ou hors de sa base mais en position horizontale et il est atténué lorsque le terminal n'est pas sur sa base et en position verticale comme ça peut être le cas quand il est à proximité de l'oreille de l'utilisateur.

Cependant le réglage du niveau de sonnerie est effectué en fonction d'une position du terminal qui ne tient pas compte de celle de son utilisateur.

En effet, le terminal peut également être dans une position verticale sans être sur sa base, dans d'autres cas que lorsqu'il est à proximité de l'oreille de l'utilisateur, par exemple lorsqu'il est posé sur une table. Le signal de sonnerie est alors atténué bien que le terminal soit éloigné de l'utilisateur et ce dernier n'entendra pas la sonnerie.

Inversement, le terminal peut être en position horizontal et à proximité de l'oreille de l'utilisateur quand ce dernier est par exemple allongé.

Pour les mêmes raisons, l'utilisation d'un commutateur de gravité en parallèle avec une résistance ne peut pas s'appliquer de manière efficace aux terminaux mobiles qui sont souvent en position verticale à distance de l'utilisateur, dans un sac, une poche ou analogue.

D'autre part le dispositif décrit dans ce document ne permet pas d'effectuer un réglage sur le signal de sortie du haut-parleur.

Enfin, ce dispositif nécessite des éléments supplémentaires tels que la résistance et le commutateur qui augmentent le volume et le coût du terminal.

Le document WO 94/13065 concerne un dispositif permettant d'adapter le niveau d'un signal vocal en fonction de la position du terminal qui correspond à une position mains libres ou écoute classique. Ce dispositif comporte à cet effet des switch qui, en fonction de la position du terminal, vont placer le signal vocal à un premier niveau, par exemple faible si la position correspond à celle de l'utilisation classique ou à un deuxième niveau, par exemple fort si la position correspond à celle de l'utilisation mains libres.

Ce document se pose le problème du choc acoustique. Mais les moyens pour le résoudre présentent l'inconvénient d'être électromécaniques donc encombrants et de nécessiter un terminal muni d'un volet pour définir les positions mains libres et écoute classique.

Le document EP 0 171 065 concerne un dispositif de retrocouplage acoustique d'un haut-parleur. L'idée consiste à positionner un micro sur la membrane du haut-parleur pour réguler, c'est à dire maintenir le plus constant possible, le niveau de sotie du haut-parleur. L'objectif est en fait d'améliorer la régulation des dispositifs de l'art antérieur dans lesquels le micro était positionné en face du haut-parleur mais à distance de ce dernier.

Par conséquent le problème posé dans ce document 2 est totalement opposé à celui de la présente demande qui consiste à modifier le niveau en fonction de certains paramètres.

L'invention vise donc à palier ces inconvénients.

L'invention a pour objet un terminal de radiotélécommunication, du type sans fil ou mobile, fournissant un niveau de signal de sonnerie ou de signal vocal permettant d'éviter tout risque de choc acoustique.

L'invention concerne, en outre, un terminal de radiotélécommunication dont le coût et le volume sont réduits.

A cet effet l'invention propose un terminal de radiotélécommunication comportant un transducteur audio réalisant des fonctions d'écouteur et de haut-parleur et dont une sortie est orientée vers la face avant du terminal, caractérisé en ce que le transducteur audio réalise, en outre, la fonction de sonnerie et en ce que le terminal comporte, en outre, couplés au transducteur, des moyens de réglage du niveau de l'onde acoustique émise par le transducteur suivant une direction principale sensiblement perpendiculaire à la face avant, le réglage étant effectué quelque soit la position du terminal par rapport à celle d'un utilisateur et de telle sorte que ledit niveau soit suffisant pour une utilisation à distance du terminal et inférieur à une valeur prédéterminée pour une utilisation de proximité.

Suivant un premier mode de réalisation les moyens de réglage comportent :
- des moyens de mesure d'un signal représentatif de l'état d'obturation du transducteur ; et
- des moyens de détermination du niveau de l'onde acoustique que doit fournir le transducteur, en fonction de la mesure effectuée par les moyens de mesure.

Suivant une première mise en oeuvre, les moyens de mesure d'un signal représentatif de l'état d'obturation du transducteur comportent des moyens de mesure de l'atténuation sonore du milieu externe détectée par le microphone du terminal.

Suivant une deuxième mise en oeuvre, les moyens de mesure d'un signal représentatif de l'état d'obturation du transducteur comportent des moyens de mesure de l'impédance du transducteur.

Suivant un deuxième mode de réalisation les moyens de réglage comportent une pièce de guidage de l'onde acoustique comprenant une paroi de guidage sur laquelle est ménagé au moins un trou de guidage, la pièce de guidage étant couplée rigidement à la face avant du terminal de sorte que le trou de guidage soit en regard de la sortie du transducteur afin de limiter le niveau de l'onde acoustique émise suivant la direction principale et que la paroi de guidage forme, avec la face avant du terminal, un canal de déviation d'une partie au moins de l'onde acoustique suivant une direction secondaire différente de la direction principale.

Suivant un troisième mode de réalisation, les moyens de réglage comportent :
- un volet dans lequel est monté le transducteur et qui est couplé à la face avant du terminal en étant mobile entre une position dite passive dans laquelle il n'est pas en appui contre la face avant et une position dite active dans laquelle il est en appui contre la face avant;
- des moyens de détection du passage de la position passive à la position active et inversement ; et
- des moyens de production d'un signal de réglage du niveau de l'onde acoustique du transducteur en fonction de la position du volet.

L'invention propose, en outre, un procédé de réglage du niveau de l'onde acoustique d'un transducteur contenu dans un terminal de radiotélécommunication tel que précédemment décrit, dans lequel le réglage est effectué suivant une direction principale sensiblement perpendiculaire à la face avant du terminal et quelque soit la position du terminal par rapport à celle d'un utilisateur.

Suivant un premier mode de réalisation le réglage est effectué en fonction de l'état d'obturation du transducteur.

A cet effet il comprend les étapes consistant à :
- mesurer un signal représentatif de l'état d'obturation du transducteur ; et
- régler le niveau de l'onde acoustique que doit fournir le transducteur, en fonction de la mesure effectuée.

Suivant un deuxième mode de réalisation, le réglage est effectué en déviant une partie au moins de l'onde acoustique suivant une direction secondaire différente de la direction principale.

Suivant un troisième mode de réalisation, le réglage est effectué en détectant une différence de pression appliquée sur la face avant du terminal.

L'invention sera mieux comprise dans la description qui va suivre de modes de réalisation donnés uniquement à titre d'exemple, en référence aux figures annexées.

Les figures 1a et 1b sont une représentation schématique d'un terminal selon l'invention avec un premier mode de réalisation des moyens de réglage du niveau de l'onde acoustique.

La figure 2 est un schéma fonctionnel d'une variante du premier mode de réalisation des moyens de réglage du niveau de l'onde acoustique de la figure 1.

La figure 3 est une représentation schématique d'un deuxième mode de réalisation des moyens de réglage du niveau de l'onde acoustique.

La figure 4 est une représentation schématique d'un troisième mode de réalisation des moyens de réglage du niveau de l'onde acoustique.

Le terminal 1 comporte un boîtier 2 ayant une face avant 3 et une face arrière 4 et dans lequel est monté un transducteur 5 dont la sortie 6 est orientée vers la face avant 3 du terminal. Le terminal comporte, en outre, un microphone 7 dont l'entrée 8 est également orientée vers la face avant 3 du terminal.

Le transducteur 5 est apte à réaliser les trois fonctions d'écouteur, de haut-parleur et de sonnerie.

L'objectif est donc de régler le niveau de l'onde acoustique émise par le transducteur 5 en tenant compte de la position du terminal par rapport à un utilisateur, cette position étant particulièrement délicate lorsque le transducteur est obturé par l'oreille de l'utilisateur.

On entend ici par utilisateur toute personne apte à prendre le terminal, telle que son propriétaire mais également une tierce personne comme par exemple un enfant.

Le but de l'invention consiste à régler le niveau de sortie du transducteur 5 de telle sorte que ce niveau soit suffisant pour que l'utilisateur entende la sonnerie ou le haut-parleur si le terminal est à distance mais que ce niveau ne provoque pas un choc acoustique si le transducteur est obturé par l'oreille de l'utilisateur.

A cet effet, le terminal comporte des moyens de réglage de l'onde acoustique émise par le transducteur suivant une direction principale D sensiblement perpendiculaire à la face avant 3 du terminal, le réglage étant effectué quelque soit la position du terminal par rapport à celle de l'utilisateur.

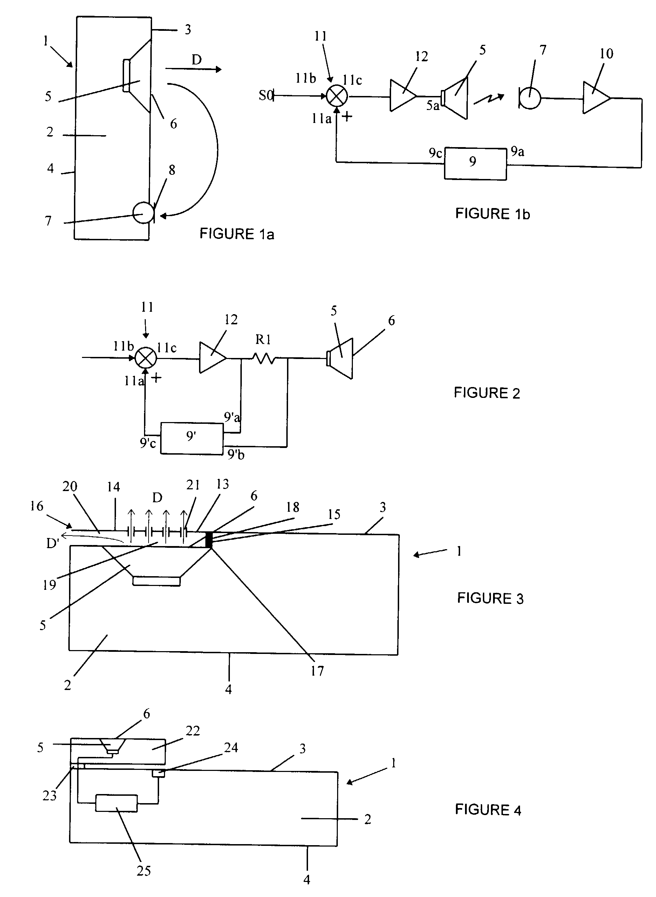

Suivant un premier mode de réalisation, représenté aux figure 1b et 2, le réglage est effectué en tenant compte de l'état d'obturation du transducteur 5. A cet effet, le terminal comporte des moyens de mesure d'un signal représentatif de cet état d'obturation et des moyens de détermination du niveau de l'onde acoustique que doit fournir le transducteur en fonction de la mesure effectuée par les moyens de mesure.

Suivant une première mise en oeuvre, les moyens de mesure comportent un circuit de mesure 9 dont l'entrée 9a est reliée au microphone 7 du terminal via un amplificateur 10, le signal représentatif de l'état d'obturation du transducteur mesuré étant l'atténuation sonore du milieu externe qui est détectée par le microphone 7.

En outre les moyens de détermination comportent un circuit de comparaison 11 dont une première entrée 11a est reliée à la sortie 9c du circuit de mesure 9, et à une deuxième entrée 11b duquel est appliquée une valeur seuil d'atténuation sonore S0. Le circuit de comparaison 11 est en outre relié par sa sortie 11c, via un circuit de réglage 12, à une entrée 5a du transducteur 5.

La valeur d'atténuation sonore mesurée est comparée à la valeur seuil S0, cette valeur seuil S0 correspondant à l'atténuation sonore provoquée par l'obturation du transducteur par l'oreille de l'utilisateur. En fonction du résultat de la comparaison, le circuit de réglage 12 règle le niveau de l'onde acoustique émise par le transducteur 5. Si l'atténuation sonore mesurée est égale à la valeur seuil S0 ledit niveau est atténué jusqu'à ce que la valeur d'atténuation sonore mesurée soit à nouveau différente de la valeur seuil S0.

Suivant une deuxième mise en oeuvre, le signal représentatif de l'état d'obturation du transducteur est l'impédance du transducteur.

A cet effet les moyens de mesure comportent un circuit de mesure 9' dont les entrée 9'a et 9'b sont reliées respectivement aux bornes de la résistance interne du transducteur représentée symboliquement par R1, cette résistance interne étant représentative de l'impédance du transducteur. Une sortie 9'c du circuit de mesure 9' est reliée à la première entrée 11a du circuit de comparaison 11.

A la deuxième entrée 11b du circuit de comparaison 11 est appliquée une valeur seuil d'impédance S'0 correspondant à l'impédance du transducteur lorsqu'il est obturé par l'oreille de l'utilisateur.

Bien entendu dans le cas de la prise en compte de l'état d'obturation du transducteur, l'invention ne se limite pas à ces deux mises en oeuvre. On peut par exemple prévoir de mesurer la pression de la membrane du transducteur ou encore sa vitesse de déplacement.

Selon une autre caractéristique les moyens de réglage comportent en outre des moyens d'émission d'une salve de sonnerie dont le niveau augmente graduellement jusqu'au niveau déterminé en fonction de l'état d'obturation du transducteur.

Ainsi, à l'arrivée d'un appel entrant dans le terminal 1, on émet une salve de sonnerie dont le niveau augmente graduellement jusqu'à un niveau maximum, l'étape de mesure de l'atténuation sonore étant effectuée pendant l'émission de la salve de sonnerie de manière à déterminer le niveau de l'onde acoustique que doit fournir le transducteur en fonction de son état d'obturation.

D'autre part, l'étape de mesure de l'atténuation sonore peut être effectuée cycliquement.

Suivant un deuxième mode de réalisation le réglage du niveau de l'onde acoustique du transducteur suivant la direction principale D est effectué en déviant une partie au moins de l'onde acoustique suivant une direction secondaire D' différente de la direction principale D.

A cet effet, comme représenté à la figure 3, les moyens de réglage comportent une pièce de guidage 13 de l'onde acoustique comprenant une première et une seconde parois de guidage respectivement 14 et 15 couplées rigidement entre elles par l'une de leurs extrémités et présentant chacune une autre extrémité libre respectivement 16 et 17. La pièce de guidage est couplée rigidement à la face avant 3 du terminal 1 de telle sorte que la première paroi de guidage 14 s'étende sensiblement parallèlement à la face avant 3 alors que la seconde paroi de guidage 15 s'étend sensiblement perpendiculairement à cette même face avant 3. Par exemple, la face avant 3 comporte un épaulement 18 s'étendant sensiblement perpendiculairement et contre lequel est fixé la deuxième paroi de guidage 15. La pièce de guidage 13 forme ainsi avec la face avant 3 du terminal, une cavité 19 présentant un canal de déviation 20 ouvert du côté de l'extrémité libre 16 de la première paroi de guidage 14.

Dans la première paroi de guidage 14 sont ménagés plusieurs trous de guidage 21, de sorte qu'ils soient en regard de la sortie 6 du transducteur 5.

La présence de ces trous de guidage 19 permet de limiter le niveau de l'onde acoustique émise suivant la direction principale D une partie au moins de l'onde acoustique étant déviée suivant la direction secondaire D' sensiblement parallèle à la première paroi 14.

Suivant un troisième mode de réalisation représenté à la figure 4, le réglage est effectué en détectant une différence de pression appliquée sur la face avant du terminal.

A cet effet, les moyens de réglage comportent un volet 22 dans lequel est monté le transducteur 5 et qui est couplé à la face avant 3 du terminal 1 par l'intermédiaire de moyens mécaniques 23 en étant mobile entre une position dite passive dans laquelle il n'est pas en appui contre la face avant 3 et une position dite active dans laquelle il est en appui contre la face avant 3. Les moyens mécaniques 23 sont aptes à faire passer le volet 22 entre les deux positions en fonction de la pression appliquée contre le volet, de manière à faire la distinction entre la pression de l'oreille de l'utilisateur et la pression d'un objet.

Les moyens de réglage comportent en outre des moyens de détection 24 du passage de la position passive à la position active et inversement. Ces moyens de détection peuvent être par exemple un détecteur de contact ou de pression monté sur la face avant 3 du terminal en regard du volet 22 et fournissant un signal de détection lorsque le volet 22 vient en contact avec la face avant 3 du terminal 1.

Les moyens de détection sont reliés en sortie à un circuit de réglage 25 semblable au circuit de réglage 12 précédemment décrit, le réglage du niveau de l'onde acoustique étant effectué en fonction de la détection. Si le volet 22 est en contact avec la face avant 3 du terminal 1 ledit niveau est atténué jusqu'à ce que le volet ne soit plus en contact.

Bien entendu ces différents modes de réalisation décrits peuvent être combinés les uns avec les autres de manière à diminuer encore plus les risques de choc acoustiques.

## Revendications

1. Terminal de radiotélécommunication comportant un transducteur audio (5) réalisant des fonctions d'écouteur et de haut-parleur et dont une sortie (6) est orientée vers la face avant (3) du terminal (1), caractérisé en ce que le transducteur audio (5) réalise, en outre, la fonction de sonnerie et en ce que le terminal (1) comporte, en outre, couplés au transducteur, des moyens de réglage (7, 9, 10, 11, 12 ; R1, 9' ; 13, 20, 21 ; 22, 23, 24, 25) du niveau de l'onde acoustique émise par le transducteur suivant une direction principale (D) sensiblement perpendiculaire à la face avant (3), le réglage étant effectué quelque soit la position du terminal par rapport à celle d'un utilisateur et de telle sorte que ledit niveau soit suffisant pour une utilisation à distance du terminal et inférieur à une valeur prédéterminée pour une utilisation de proximité.

2. Terminal de radiotélécommunication selon la revendication 1, caractérisé en ce que les moyens de réglage comportent :
- des moyens de mesure (9, 9') d'un signal représentatif de l'état d'obturation du transducteur ; et
- des moyens de détermination (11, 12) du niveau de l'onde acoustique que doit fournir le transducteur, en fonction de la mesure effectuée par les moyens de mesure (9, 9').

3. Terminal de radiotélécommunication selon la revendication 2, caractérisé en ce que les moyens de mesure d'un signal représentatif de l'état d'obturation du transducteur comportent des moyens de mesure (7, 9) de l'atténuation sonore du milieu externe détectée par le microphone du terminal.

4. Terminal de radiotélécommunication selon la revendications 2 ou 3, caractérisé en ce que les moyens de mesure d'un signal représentatif de l'état d'obturation du transducteur comportent des moyens de mesure (R1, 9') de l'impédance du transducteur.

5. Terminal de radiotélécommunication selon l'une quelconque des revendications 1 à 4, caractérisé en ce que les moyens de réglage comportent une pièce de guidage (13) de l'onde acoustique comprenant une paroi de guidage (14, 15) sur laquelle est ménagé au moins un trou de guidage (21), la pièce de guidage (13) étant couplée rigidement à la face avant (3) du terminal de sorte que le trou de guidage (21) soit en regard de la sortie (6) du transducteur afin de limiter le niveau de l'onde acoustique émise suivant la direction principale (D) et que la paroi de guidage (15) forme, avec la face avant (3) du terminal (1), un canal de déviation (20) d'une partie au moins de l'onde acoustique suivant une direction secondaire (D') différente de la direction principale (D).

6. Terminal de radiotélécommunication selon l'une quelconque des revendications 1 à 4, caractérisé en ce que les moyens de réglage comportent :
- un volet (22) dans lequel est monté le transducteur et qui est couplé à la face avant (3) du terminal (1) en étant mobile entre une position dite passive dans laquelle il n'est pas en appui contre la face avant (3) et une position dite active dans laquelle il est en appui contre la face avant ;
- des moyens de détection (24) du passage de la position passive à la position active et inversement ; et
- des moyens de production (25) d'un signal de réglage du niveau de l'onde acoustique du transducteur en fonction de la position du volet (22).

7. Terminal de radiotélécommunication selon l'une quelconque des revendications 2 à 6, caractérisé en ce que les moyens de réglage comportent des moyens d'émission d'une salve de sonnerie dont le niveau augmente graduellement jusqu'au niveau déterminé en fonction de l'état d'obturation du transducteur.

8. Procédé de réglage du niveau de l'onde acoustique d'un transducteur monté dans un terminal de radiotélécommunication selon l'une quelconque des revendications 1 à 7, caractérisé en ce que le réglage est effectué suivant une direction principale (D) sensiblement perpendiculaire à la face avant (3) du terminal (1) et quelque soit la position du terminal par rapport à celle d'un utilisateur.

9. Procédé de réglage selon la revendication 8, caractérisé en ce que le réglage est effectué en fonction de l'état d'obturation du transducteur (5).

10. Procédé de réglage selon la revendication 9, caractérisé en ce qu'il comprend les étapes consistant à :
- mesurer un signal représentatif de l'état d'obturation du transducteur (5) ; et
- régler le niveau de l'onde acoustique que doit fournir le transducteur (5), en fonction de la mesure effectuée.

11. Procédé de réglage selon la revendication 10, caractérisé en ce que le signal représentatif mesuré est l'atténuation sonore du milieu externe détectée par le microphone (7) du terminal (11).

12. Procédé de réglage selon la revendication 10 ou 11, caractérisé en ce que le signal représentatif mesuré est l'impédance du transducteur (5).

13. Procédé de réglage selon l'une quelconque des revendications 8 à 12, caractérisé en ce que le réglage est effectué en déviant une partie au moins de l'onde acoustique suivant une direction secondaire (D') différente de la direction principale (D).

14. Procédé de réglage selon l'une quelconque des revendications 8 à 13, caractérisé en ce que le réglage est effectué en détectant une différence de pression appliquée sur la face avant (3) du terminal.

15. Procédé de réglage selon l'une quelconque des revendications 9 à 14, caractérisé en ce qu'à l'arrivée d'un appel entrant dans le terminal (1), on émet une salve de sonnerie dont le niveau augmente graduellement jusqu'à un niveau maximum, l'étape de mesure du signal représentatif de l'état d'obturation du transducteur (5) étant effectuée pendant l'émission de la salve de sonnerie de manière à déterminer le niveau de l'onde acoustique que doit fournir le transducteur en fonction de son état d'obturation.

16. Procédé de réglage selon l'une quelconque des revendications 9 à 15, caractérisé en ce que l'étape de mesure du signal représentatif de l'état d'obturation du transducteur (5) est effectuée cycliquement.
